# EUROPÄISCHE PATENTSCHRIFT

(11) **EP 1 131 655 B1**
(45) Veröffentlichungstag und Bekanntmachung des Hinweises auf die Patenterteilung: **28.12.2005**
(21) Anmeldenummer: 99952534.8
(22) Anmeldetag: 07.10.1999
(51) Int. Cl.: G01W 1/08

(54) **AEROLOGISCHE FALLSONDE**
AEROLOGICAL DROP SONDE
SONDE AEROLOGIQUE LARGABLE

(30) Priorität: 16.11.1998 DE 19852797
(43) Veröffentlichungstag der Anmeldung: 12.09.2001
(73) Patentinhaber: Forschungszentrum Karlsruhe GmbH, 76133 Karlsruhe (DE)
(72) Erfinder: KOTTMEIER, Christoph, D-76133 Karlsruhe (DE)
(86) Internationale Anmeldenummer: PCT/EP1999/007522
(87) Internationale Veröffentlichungsnummer: WO 2000/029875

(56) Entgegenhaltungen:
- DE-A- 3 929 363
- FR-A- 2 759 775
- US-A- 5 186 418

## Beschreibung

Die Erfindung betrifft eine aerologische Fallsonde, die vom Boden aus mit einem Auftriebsmittel in vorgesehene Höhe gebracht wird und während des Aufstiegs Meßwerte aufnimmt, oder die mit einem Transportmittel in vorgesehene Höhe gebracht und dort ausgeworfen wird, um Messungen während des Sinkens zur Erde aufzunehmen.

Zur routinemäßigen Gewinnung von Meßdaten in der freien Atmosphäre werden durch die Wetterdienste viele Länder aerologische Sonden eingesetzt, die an Freiballonen aufsteigen und die Meßdaten, wie Temperatur, Druck und Feuchte, im Frequenzbereich von 395 - 405 MHz an Bodenstationen übertragen. Durch Radar- oder Radiotheodolithverfolgung des Ballons wird die Bahnkurve bestimmt, aus der sich dann die Windgeschwindigkeit in verschiedenen Höhen ableiten läßt.

Für Forschungszwecke sind solche Routineradiosonden nur bedingt geeignet, da die Aufstiege örtlich an die Empfangsstationen gebunden sind, nur jeweils eine Sonde zur gleichen Zeit empfangen werden kann und keine zusätzlichen Größen gemessen und übertragen werden können.

Radiosondenanlagen mit Global Positioning System (GPS)-Positionierung (Differential-GPS) werden seit wenigen Jahren eingesetzt, um bei globaler Einsatzmöglichkeit eine genauere Positions- und damit Windbestimmung zu erreichen. Dabei wird die "codeless technology" verwendet (Saarnimo, T. "Reliable satellitebased GPS", Vaisala News, 142, 4 - 11, Helsinki, 1997). Das "code correlating"-Verfahren für die Einmalverwendung in Radiosonden fordert teure Empfänger, die für Einmalverwendung nicht in Frage kommen.

Zum Abwurf und zur Telemetrie von Fallsonden von Flugzeugen werden heute Radiosondierungsanlagen in modifizierter Weise gebaut. Die Empfangsanlage befindet sich in einem Flugzeug, wo die vol der Fallsonde gesendeten Meßdaten empfangen und registriert werden (Vaisala Co, GPS Dropwindsonde RD 93 and Airborne Atmospheric Profiling System AVAPS, Product Description, Ref. A606en, 1997-06, 6pp., 1997 und Call, D., A new GPS Rawinsonde System, Atmospheric Instrumentation Research Inc., 5pp, 1997). Die zur Zeit weitestgehende Fallsondenentwicklung wird von der Firma Vaisala in Kooperation mit dem National Center for Atmospheric Research (NCAR) und dem Deutschen Zentrum für Luft- und Raumfahrt (DLR Oberpfaffenhofen) zum Einsatz in dem Höhenforschungsflugzeug STRATO 2C und in Hurrikane-Forschungsflugzeugen betrieben. Mit dieser Technik können bis zu vier Radiosonden gleichzeitig auf verschiedenen Übertragungsfrequenzen Daten übermitteln. Die Position wird mittels GPS bestimmt, in dem die Phasenlage der empfangenen GPS-Satelliten zusätzlich zu den meteorologischen Daten auf eine Trägerfrequenz aufmoduliert und übertragen wird. Die Empfangsstation im Flugzeug nimmt gleichzeitig die GPS-Daten auf, so daß mit der bekannten Position des Flugzeugs auch die aktuelle Position der Fallsonden bestimmt werden kann.

Im Fallsondenbetrieb wird mit dem Empfang von maximal vier Sonden für verschiedene Anwendungen keine ausreichende Sondierungsdichte erreicht, wie im folgenden am Beispiel der Vermessung von Gewittern an der damit möglichen räumlichen Dichte der Sondierung dargestellt wird:

Bei einer Abwurfhöhe von 7 km beträgt bei einer Fall- bzw. Sinkgeschwindigkeit von 5 m/s die Fallzeit etwa 23 min. Unter Berücksichtigung der Vor- und Nachbereitungszeiten für jede Sonde sind somit günstigstenfalls durchschnittlich Abwürfe mit einem Zeitabstand von etwa 8 min möglich. Moderne Forschungsflugzeuge haben Fluggeschwindigkeiten von 70 - 150 m/s. Innerhalb der 8 min legen sie eine Distanz von 33 - 67 km zurück. Gewitter haben allerdings eine horizontale Erstreckung von etwa 10 - 20 km. Eine engmaschige Sondierung ist deshalb nicht möglich, es sei denn, daß das Forschungsflugzeug erhebliche Zeit in Warteschleife verbringt. Dies ist aus Kostengründen bei den hohen Flugstundenpreisen nicht effektiv. Bei Niederschlag und Gewittern insbesondere führen die Dämpfung elektromagnetischer Wellen und die elektrische Entladungen zu erheblichen Störungen auf dem Übertragungswege und beeinträchtigen die sichere Datenübetragung.

Die Empfangsanlage wird bei allen Fallsondensystemen an Bord des Flugzeugs mitgeführt und erfordert zwei Personen zur Bedienung. Infolge dessen ist eine MindestgröBe des Flugzeugs für das Bedienpersonal, der Montage eines Racks für die Empfangsanlage, die UHF-Antenne und die GPS-Antenne notwendig. Kleinflugzeuge mit einem erheblich niedrigeren Flugstundenpreis kommen aus den genannten Gründen für diese Aufgabe nicht in Betracht.

In der US 5,186,418 wird eine aerologische Fallsonde beschrieben, welche mittels Ballon oder Flugzeugabwurf in die Atmosphäre gebracht wird, um dort Messungen durchzuführen. Die Sonde hat eine aerodynamische Form mit mindestens einer beweglichen Steuerfläche, wie einer Delta-Fläche mit einem Ruder, das über eine Steuereinrichtung bewegt wird, um die Sonde entlang einer vorberechneten Flugbahn gesteuert herunter zu gleiten.

Diese meteorologische Sonde hat, um Messungen während des Sinkens zur Erde aufzunehmen, Meßsensoren, mit denen die drei meteorologischen Basisgrößen Temperatur, Luftdruck und Feuchte über je einen entsprechenden Sensor gemessen werden können. Sie hat eine batteriebetriebene Stromversorgung,
eine Signalwandlereinrichtung und eine Einrichtung zur In/Out-Steuerung und Datenvorprozessierung. Ferner hat sie einem Empfänger mit GPS-Antenne, ein Funkgerät zur abschließenden Übermittlung der Landeposition und einen zentralen Prozessor, der die verschiedenen Baugruppen verknüpft.

Die wiederverwendbare Sonde gemäß der US 5,186,418 soll nach dem von einer Leitstelle aktiv gesteuerten Sinkflug an einem vorgegebenen Ort landen. Hierzu braucht sie eine ausgeprägte aerodynamische Form mit der Möglichkeit zur Flugsteuerung, also wenigstens einem Flügel mit einem Ruder. Die Eigenbewegung von 20 m/sec schließt eine direkte Bestimmung des horizontalen Windes aus der Flugbewegung aus. Um das dennoch zu können, wäre ein spezieller Strömungsmesser nötig. Der Fallschirm an der Sonde dient nur dem Abbremsen unmittelbar vor dem Aufsetzen, nicht aber dem absichtlichen Absenken der Sinkgeschwindigkeit. Eine aerodynamische Form wäre dann überflüssig, weil wenig einflußreich bei geringer Geschwindigkeit.

Der Frequenzbereich für die Datenübertragung von Radiosonden aller Typen ziviler und militärischer Nutzer ist so eng, daß es bereits jetzt schwierig ist, vom Deutschen Wetterdienst bzw. der Telekom mehrere Frequenzen zugewiesen zu bekommen. Da der Anspruch andrer Interessensgruppen auf Funkfrequenzen eher noch zunehmen wird, ist nicht zu erwarten, in Zukunft eine größere Zahl von Frequenzen zugewiesen zu bekommen.

Der Erfindung liegt die Aufgabe zugrunde, zur Untersuchung kleinräumiger meteorologischer Phänomen, z. B. mesoskalige Zirkulationensysteme oder Gewitter, aerologische Sonden anzubieten, die autonom Messungen aufnehmen und registrieren sowie präzise positioniert werden, gleichzeitig mit mehreren baugleichen Geräten betrieben werden können und für weitere Meßgrößen erweiterbar sind.

Die Aufgabe wird mit aerologischen Fallsonden, die gemäß den Merkmalen des Anspruchs 1 aufgebaut sind, gelöst. Die Erfindung besteht aus der Verwendung verschiedener technischer Komponenten, die zu einer neuartigen aerologischen Sonde zusammengestellt werden. Die Sonde kann mit herkömmlicher Technik vom Boden aus mit einem Ballon oder mit einer Kleinrakete gestartet werden oder von einem Flugzeug aus abgeworfen als Fallsonde am Fallschirm (Anspruch 6) zum Boden sinken. Sie ermöglicht während des Aufstiegs oder Falls neben den meteorologischen Daten, wie die Temperatur, die Luftfeuchte und den Luftdruck, die Position zu messen und zu registrieren, das heißt, die aus den Meßwerten gewonnenen Meßdaten auf einem Speicher, z. B. einem Halbleiterspeicher (Anspruch 4), abzulegen und nach der Landung auszulesen. In die Fallsonde ist ein Mobilfunksender oder ein Satellitentelemetriesender für die Satellitentelemetriesysteme Argos, Globalstar, Iridium und weitere dafür geeignete Systeme (Anspruch 2) integriert, der entweder zeit- oder druckgesteuert aktiviert wird und die GPS-Position kontinuierlich oder nach der Landung überträgt. Hierdurch wird das Wiederfinden der Sonde sichergestellt. Alternativ können die Daten vollständig über Funk übertragen werden (Anspruch 3). Für die Messung von Luftdruck, Temperatur und relativer Feuchte wird eine kommerzielle Radiosonde eingesetzt. Eine Erweiterungsmöglichkeit für luftchemische Messungen z. B. wird durch weitere Kanäle berücksichtigt. Die Windberechnung erfolgt nach dem Auslesen der Daten über die Berechnung der Position mittels des integrierten 8- oder 12- Kanal-GPS-Empfängers.

Die Fallsonden haben an ihrem Boden einen Aufprallabsorber, eine Art Stoßdämpfer und sind daher nach entsprechender Wartung und Überprüfung wieder verwendbar (Anspruch 5). Die Fallsonde kann auch, für den freien Fall geeignet, gebaut werden, indem sie eine Außenform mit so hohem Luftwiderstand besitzt, daß sie beim Sinken eine Geschwindigkeit erreicht, die beim Aufprall noch keine Zerstörung hervorruft (Anspruch 7).

Die Daten werden während der Messung in dem Speicher der Fallsonde sukzessive abgelegt. Auf diese Weise können grundsätzlich beliebig viele Sonden gleichzeitig Messungen aufnehmen. Eine Telemetrieverbindung ist nur kurzfristig kurz vor oder nach der Landung notwendig, um die letzte gültige Position zur Bergung der Sonde zu übertragen . Für mehrere gleichzeitig eingesetzte Fallsonden kann diese dann sequentiell übermittelt oder abgerufen werden (Anspruch 3).

Die Mitführung der Empfangsanlage im Flugzeug entfällt damit. Für den Fallsondenbetrieb ist somit ein eines Flugzeug einsetzbar, wodurch erheblich Kosten eingespart werden.

Das Problem der Datenübertragung über Funk im 400-MHz-Bereich wegen Frequenzfreigabe und elektromagnetischer Störung entfällt.

Im Gegensatz zu allen anderen Varianten ist die Wiederverwendbarkeit der Fallsonde hervorzuheben. Dies schließt zwar den Einsatz in unzugänglichen Regionen, wie über Wasserflächen und in hohen Gebirgslagen, aus, hat aber den Vorteil, daß die Gesamtkosten niedriger liegen und ein höherer Einzelpreis durch bessere Systemkomponenten tolerierbar ist. Insbesondere kann eine präzisere Positionsberechnung und damit ein Windgeschwindigkeitsprofil ermittelt werden, da GPS-C/A-Code-Empfänger verwendet werden.

Die Erfindung wird anhand der Zeichnung näher erläutert. Es zeigen:
Figur 1 die Basiskomponenten der aerologischen Fallsonde,
Figur 2 die schematische Darstellung der Fallsonde und
Figur 3 das Datenfluß-Diagramm bei sinkender Sonde.

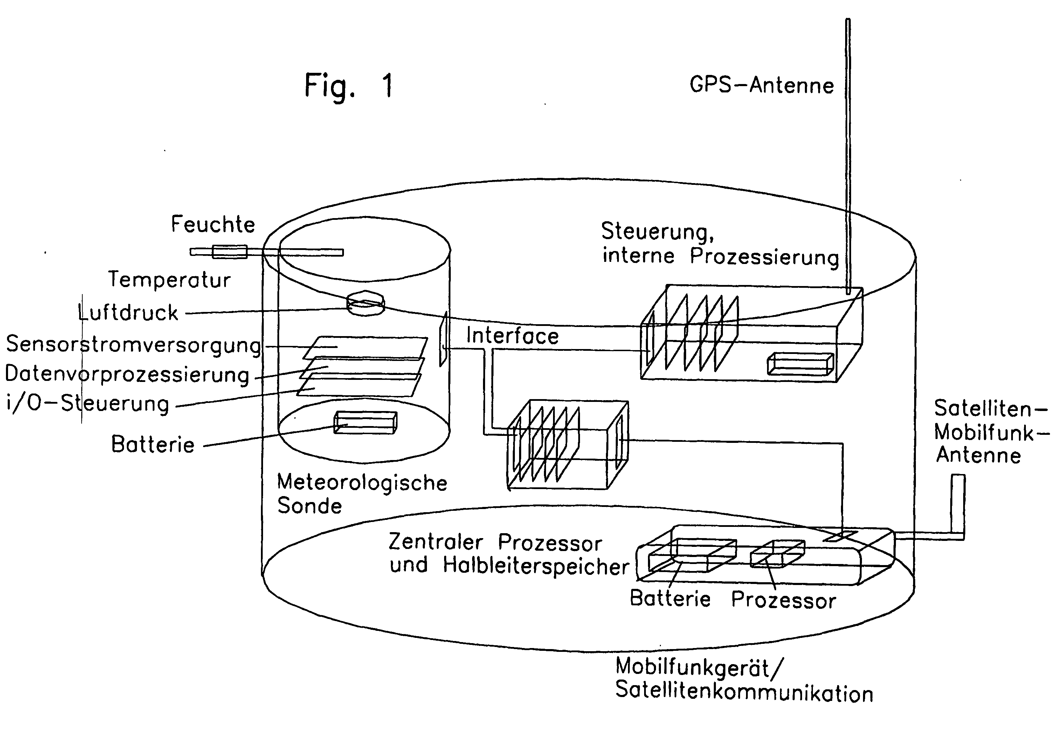

Die meteorologischen Basisgrößen Temperatur, Luftdruck und (relative) Feuchte werden von einer herkömmlichen, kommerziell angebotenen Radiosonde aufgenommen und über die Schnittstelle an den internen Mikrocomputer (Datenvorprozessierung) übergeben (Figur 1)

Mit dem in der Fallsonde eingebauten GPS-Empfänger werden die im C/A-Code (Civil Access = für zivile Nutzung freigegebene aber gegenüber dem nichtzugänglichen militärischen Code etwas ungenaueren Code) empfangenen Daten einschließlich der Phaseninformation sekündlich an die interne Prozessierung übergeben.

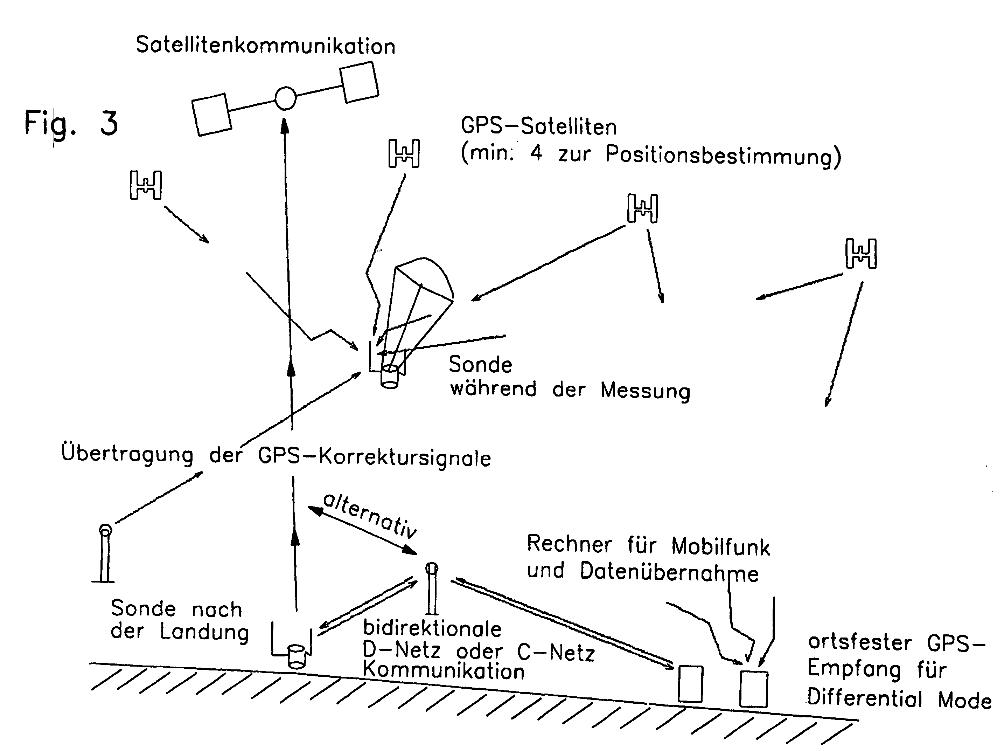

Der Empfang der GPS-Satelliten ist erfahrungsgemäß in der Nähe der Erdoberfläche durch Hindernisse und Geländinhomogenität beeinträchtigt. Infolge dessen werden auch die GPS-Daten in ausreichendem Abstand von der Erdoberfläche in ca. 100 m Höhe zum Auffinden der Fallsonde verwendet. Die Abdrift zwischen 100 und 0 m Höhe ist dabei klein genug, um den Fundort zu bestimmen. Die Berechnung erfolgt "off-line" nach dem Auslesen der GPS-Rohdaten. Wird ein Referenz-Empfänger am Boden im Umkreis von ca. 200 km betrieben, ist differentielles GPS möglich (Figur 3).

Der Rechner, der zentrale Prozessor und Halbleiterspeicher, ist von der neuen Rechnergeneration ein leichter "hand held computer" bzw. ein "palmtops". Er nimmt die meteorologischen Daten, die GPS-Daten sowie die Daten von freien Eingangskanälen auf und steuert die Ein- und Ausgabe von Daten und die Speicherung während des maximal 30 minütigen Meßvorgangs. Bei sekündlicher Datenübernahme von 20 Kanälen mit 10 bit Auflösung ergibt sich eine Gesamtdatenmenge von ca. 30 kByte.

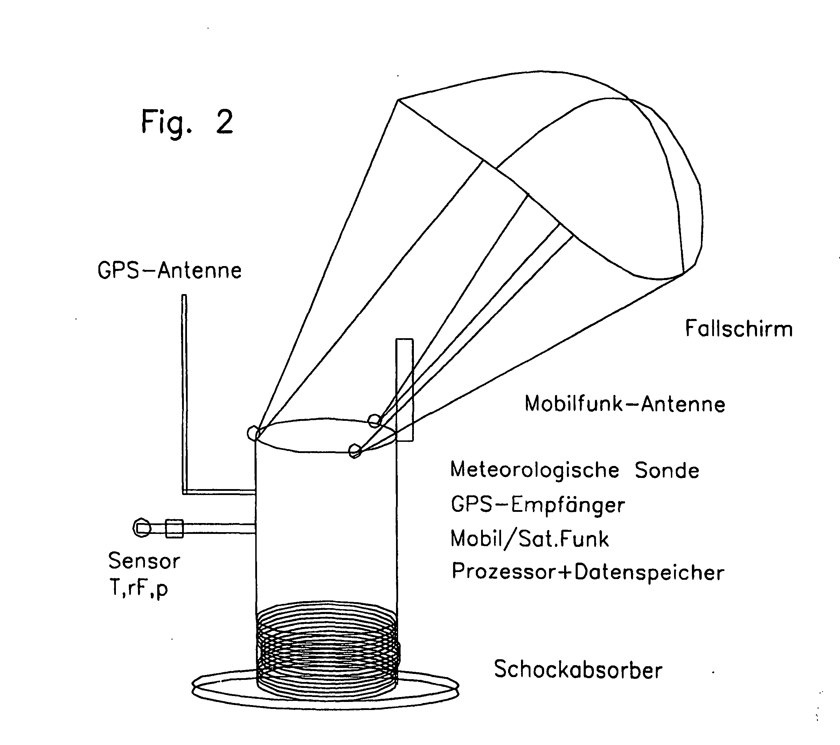

Die Fallsonde, die vom Flugzeug abgeworfen, an dem Fallschirm hängend oder durch entsprechende Bauform ausreichend gebremst, zur Erde sinkt, hat den Schockabsorber (Figur 2), um den Aufprall abzufangen bzw. zu dämpfen. Dadurch ist die Fallsonde nach entsprechender Überprüfung wieder verwendbar. Nach dem Auftreffen am Boden wird entweder zeit- oder druckgesteuert das eingebaute Funkgerät (Figur 1) aktiviert und nach Aufbau der Verbindung eine kurze Statusinformation übertragen (Figur 3), um die Fallsonde sicherstellen zu können.

Alternativ werden die Daten vollständig über den eingebauten Sender übertragen. Insbesondere enthält die Meldung die Positionsdaten der letzten gültigen Berechnung, d. h. bei ausreichender Anzahl empfangener GPS-Satelliten (Figur 3), die unmittelbar am Boden reduziert sein kann.

Wiederum alternativ schaltet die Fallsonde nach der Landung in einen Ruhemodus und wird nur extern durch einen Anruf über das Funkgerät aktiviert. Mobilfunkgeräte sind inzwischen in leichter Ausführung, ca. 100 g, mit einer Schnittstelle für die Datenübertragung und automatischer Wahl zwischen D- und C-Netz auf dem Markt.

Die Fallsonde liefert physikalische Größen mit den folgenden Meßbereichen, der Auflösung und der Genauigkeit:

| | Bereich | Genauigkeit | Auflösung |
|---|---|---|---|
| Luftdruck | 1060 - 100 hPa | ±0,5 hPa | 0,1 Pa |
| Temperatur | -80°C - +40°C | ±0,2°C | 0,1°C |
| rel. Feuchte | 0 - 100% | ±2 % | 1% |
| Sondenposition | 0 - 300 km | ±10 m | ±5 m |
| 3 freie Kanäle | -5 - +5 V | 5/1024 V | 10/1024 V |

Die Fallsonde ist so ausgelegt und konstruiert, daß sie an kommende Satellitenkommunikationssyteme, die in Vorbereitung sind, ohne weiteren Aufwand angepaßt werden kann.

## Patentansprüche

1. Aerologische Fallsonde, die vom Boden aus mit einem Auftriebsmittel in vorgesehene Höhe gebracht wird und während des Aufstiegs Meßwerte aufnimmt, oder die mit einem Transportmittel in vorgesehene Höhe gebracht und dort ausgeworfen wird, um Messungen während des Sinkens zur Erde aufzunehmen, bestehend aus:
- einer meteorologischen Sonde, mit der die drei meteorologischen Basisgrößen Temperatur, Luftdruck und Feuchte über je einen entsprechenden Sensor gemessen werden,
- einer batteriebetriebenen Stromversorgung,
- einer Signalwandlereinrichtung und einer Einrichtung zur In/Out-Steuerung und Datenvorprozessierung,
- einem Empfänger mit GPS-Antenne,
- einem Funkgerät zur abschließenden Übermittlung der Landeposition und
- einem zentralen Prozessor, der die verschiedenen Baugruppen verknüpft,
**dadurch gekennzeichnet, daß**
- die Batterie zur Stromversorgung für die Sensoren dient, die über je eine zugehörigen Signalwandlereinrichtung an eine Einrichtung zur In/Out-Steuerung und Datenvorprozessierung angeschlossen sind,
- der die Baugruppen verknüpfende zentrale Prozessor mit einem Speicher ausgerüstet ist, in dem die Meßwerte mit zugehöriger Position abgelegt werden,
- die Fallsonde ungesteuert zu Boden sinkt.

2. Aerologische Fallsonde nach Anspruch 1,
**dadurch gekennzeichnet,**
**daß** das Funkgerät ein Mobilfunkgerät oder ein Sendegerät für ein Satellitentelemetriesystem ist.

3. Aerologische Fallsonde nach den Ansprüchen 1 und 2,
**dadurch gekennzeichnet,**
**daß** zum Auffinden derselben mindestens ihre Positionsdaten über das Mobilfunkgerät oder das Sendegerät an den Positionsempfänger übermittelbar sind.

4. Aerologische Fallsonde nach Anspruch 3,
**dadurch gekennzeichnet,**
**daß** der Speicher des zentralen Prozessors ein Halbleiterspeicher ist.

5. Aerologische Fallsonde nach Anspruch 4,
**dadurch gekennzeichnet,**
**daß** die Fallsonde außen an ihrem Boden einen Aufprallabsorber hat.

6. Aerologische Fallsonde nach Anspruch 5,
**dadurch gekennzeichnet,**
**daß** die Fallsonde einen Fallschirm hat, der beim Auswurf zum Begrenzen der Sinkgeschwindigkeit geöffnet wird.

7. Aerologische Fallsonde nach Anspruch 5,
**dadurch gekennzeichnet,**
**daß** die Fallsonde eine Außenform hat, die beim Sinken einen erhöhten Luftwiderstand bewirkt, so daß die Sinkgeschwindigkeit einen vorgegebenen oder zulässigen Höchstwert nicht überschreiten kann.

## Claims

1. Aerological drop sonde that is brought to the height envisaged from the ground with an ascending means and records measurement values during its ascent or that is brought to the height envisaged with a transport means and dropped there to make measurements while sinking down to earth, consisting of:
- A meteorological probe, by means of which the three basic meteorological parameters of temperature, air pressure, and humidity are measured by a sensor each,
- a battery-driven power supply,
- a signal conversion unit and a system for in/out control and data pre-processing,
- a receiver with GPS antenna,
- a radio unit for the final transmission of the landing position, and
- a central processor that links the different assemblies,
**characterized by**
- a battery for supplying power to the sensors that are connected to a system for in/out control and data pre-processing via a corresponding signal conversion unit,
- the central processor linking the assemblies being equipped with a memory for storing the measurement values and the corresponding measurement positions,
- the drop sonde sinking to the ground in an uncontrolled manner.

2. Aerological drop sonde according to Claim 1,
**characterized by**
the radio unit being a mobile radio device or a transmission device for a satellite telemetry system.

3. Aerological drop sonde according to Claims 1 and 2,
**characterized by**
the fact that for finding the drop sonde, its position data at least are transmitted to the position receiver by the mobile radio device or the transmission device.

4. Aerological drop sonde according to Claim 3,
**characterized by**
the memory of the central processor being a semiconductor memory.

5. Aerological drop sonde according to Claim 4,
**characterized by**
the drop sonde being equipped with a shock absorber outside at the bottom.

6. Aerological drop sonde according to Claim 5,
**characterized by**
the drop sonde having a parachute that is opened when the sonde is dropped in order to limit the sinking speed.

7. Aerological drop sonde according to Claim 5,
**characterized by**
the drop sonde having an outer shape that increases the air resistance when sinking, such that the sinking speed cannot exceed a given or permissible maximum value.

## Revendications

1. Sonde descendante aérologique qui est portée du sol à une altitude prévue par un moyen de sustentation et qui, pendant la montée, enregistre des valeurs de mesure, ou qui, par un moyen de transport, est porté à une altitude prévue d'où elle est éjectée pour enregistrer des valeurs de mesure pendant la descente à la terre, qui consiste en:
- une sonde météorologique mesurant chacune des trois grandeurs de base météorologiques, températures, pression d'air et humidité, par un détecteur correspondant,
- une alimentation électrique par batterie,
- un convertisseur de signal et un dispositif de commande d'entrée/sortie et un préprocesseur des données
- un récepteur avec antenne GPS,
- un appareil radio pour la transmission finale de la position d'atterrissage et
- un processeur central enchaînant les différents ensembles,
**caractérisée en ce que**
- la batterie sert à l'alimentation des détecteurs dont chacun est connecté à un dispositif de commande d'entrée/sortie et un préprocesseur des données par un convertisseur de signal associé,
- le processeur central enchaînant les ensembles est équipé d'une mémoire dans laquelle sont
stockées les valeurs de mesure avec leurs positions associées respectives,
- la sonde descendante descend au sol d'une manière non pilotée.

2. Sonde descendante aérologique selon la revendication 1,
**caractérisée en ce que**
l'appareil radio est un appareil radiotéléphonique ou un appareil d'émission pour un système de télémétrie par satellite.

3. Sonde descendante aérologique selon les revendications 1 et 2,
**caractérisée en ce que**
pour la détection de celle-ci, du moins ses données de position peuvent être transmises au récepteur de position par l'appareil radiotéléphonique ou l'émetteur.

4. Sonde descendante aérologique selon la revendication 3,
**caractérisée en ce que**
la mémoire du processeur central est une mémoire à semi-conducteurs.

5. Sonde descendante aérologique selon la revendication 4,
**caractérisée en ce que**
la sonde descendante possède un absorbeur d'impact sur son fond.

6. Sonde descendante aérologique selon la revendication 5,
**caractérisée en ce que**
la sonde descendante possède un parachute qui s'ouvre au moment de l'éjection pour réduire la vitesse de descente.

7. Sonde descendante aérologique selon la revendication 5,
**caractérisée en ce que**
la sonde descendante possède une forme extérieure provoquant une augmentation de la résistance de l'air pendant la descente, de sorte que la vitesse de descente ne peut pas dépasser une valeur maximale fixée ou admissible.
